# EUROPÄISCHE PATENTANMELDUNG

(11) **EP 2 738 981 A1**
(43) Veröffentlichungstag der Anmeldung: **04.06.2014**
(21) Anmeldenummer: 13450052.9
(22) Anmeldetag: 02.12.2013
(51) Int. Cl.: H04L 12/58

(54) **Verfahren zum Zustellen von Schriftstücken**

(30) Priorität: 03.12.2012 AT 4592012 U
(71) Anmelder: HPC Duale Zustellsysteme GmbH, 1070 Wien (AT)
(72) Erfinder: Schneider, Josef, 2531 Gaaden (AT)
(74) Vertreter: Beer & Partner Patentanwälte KG

(57) **Zusammenfassung**

Verfahren zum Zustellen von Schriftstücken an einen Empfänger mit Empfängerdaten, die in einem Empfänger-Registrierungs-Verzeichnis hinterlegt sind, welches die Empfängerdaten mit einer Empfänger-Identifikation verknüpft, mit den folgenden Schritten:
i) ein Nutzer hinterlegt ein digitales Schriftstück in einem Abhol-Verzeichnis,
ii) es wird eine Empfänger-Identifikation abgefragt,
ii.1) wenn der Nutzer eine Empfänger-Identifikation eingibt folgt Schritt iii),

iii) es wird überprüft ob die Empfänger-Identifikation im Empfänger-Registrierungs-Verzeichnis vorhanden ist,
iii.1) wenn die Überprüfung aus Schritt iii) erfolgreich ist und eine nicht-analoge Benachrichtigungsmöglichkeit verzeichnet ist, folgt Schritt iv),

iv) anhand der korrekten Empfänger-Identifikation wird der Empfänger informiert, dass ein für ihn bestimmtes digitales Schriftstück zur Abholung bereit ist,
iv.1) der Empfänger holt das digitale Schriftstück ab und es folgt Schritt v),

v) dem Schriftstück wird das Attribut, "zugestellt" zugewiesen
vi) wenn einer der Punkte ii) bis v) nicht durchführbar ist oder nicht erfolgt, wird das Schriftstück als "nicht digital zugestellt" markiert.

## Beschreibung

Die Erfindung betrifft ein Verfahren zum Zustellen von Schriftstücken.

Grundsätzlich ist es bekannt, Schriftstücke auf zwei Arten zuzustellen: Zum Einen auf herkömmlichem Wege in Form von ausgedruckten oder auch analogen Schriftstücken mittels Post, Bote oder dergleichen, zum Anderen auf elektronischem oder auch digitalem Wege, beispielsweise via E-Mail.

Beide Varianten haben jedoch für sich wesentliche Nachteile im Vergleich zur jeweils anderen Variante des Zustellens. Der analoge Weg beansprucht im Vergleich zum digitalen erheblich mehr Zeit und viel mehr technischen und logistischen Aufwand sowie Material. Neben den Materialkosten fallen zudem Porto oder Botenentgelte an. Weiters werden häufig Schriftstücke, nachdem diese analog zugestellt wurden, seitens des Empfängers digitalisiert, um sie einfacher und vor allem platzsparend zu archivieren. Auf eine elektronische Zustellung von Schriftstücken wird dennoch meistens verzichtet. Dies hat verschiedene Ursachen. Zum Beispiel kann sich ein Versender nicht sicher sein, wann eine E-Mail geöffnet wird. Es ist zwar im Stand der Technik möglich, eine Lesebestätigung anzufordern, aber der Empfänger wird dadurch nicht automatisch veranlasst auch seinen elektronischen Posteingang zu überprüfen und eine E-Mail überhaupt zu öffnen. Insbesondere bei Angelegenheiten, die an bestimmte Fristen geknüpft sind, wird daher im Regelfall nicht auf den analogen Zustellungsweg verzichtet. Das heißt, selbst wenn ein Schriftstück zusätzlich auch digital versandt wird, entstehen dennoch die mit dem analogen Versand verbundenen Kosten, und auch die möglichen positiven Auswirkungen auf die Umwelt durch weniger Papierverbrauch und weniger Abfall bleiben aus.

Ziel der Erfindung ist es daher, ein Verfahren zum Zustellen von Schriftstücken zur Verfügung zu stellen, das die genannten negativen Effekte vermindert.

Erreicht wird dieses Ziel durch ein Verfahren mit den Merkmalen des Anspruchs 1.

Das Schriftstück soll an einen Empfänger mit Empfängerdaten, wie beispielsweise seiner Anschrift, seiner E-Mail-Adresse, seinem Namen oder auch seinem Geburtsdatum, zugestellt werden. Diese Empfängerdaten sind wenigstens teilweise in einem Empfänger-Registrierungs-Verzeichnis (RegVz) hinterlegt. Das RegVz verknüpft den Empfänger und die bekannten bzw. eingetragenen Empfängerdaten des Empfängers mit einer Empfänger-Identifikation (Empfänger-ID). Dies ist von Vorteil, da so einem Sachbearbeiter bzw. Nutzer, der dem Empfänger ein Schriftstück zustellen möchte, nicht immer alle Änderungen der Empfängerdaten bekannt sein müssen. Der Nutzer sendet immer an die selbe Empfänger-ID und mögliche Änderungen, beispielsweise der Anschrift, werden lediglich im RegVz vorgenommen und müssen vom Nutzer nicht beachtet oder bearbeitet werden.

Möchte ein Nutzer ein Schriftstück versenden, hinterlegt er es zunächst in digitaler Form in einem Abholverzeichnis. Hierauf wird der Nutzer aufgefordert eine Empfänger-ID bekannt zu geben. Wenn der Nutzer diese Empfänger-ID bekannt geben kann, und sich diese im RegVz befindet, sind seitens des Nutzers keine weiteren Handlungen mehr nötig. Automatisch wird an den Empfänger eine nicht-analoge Benachrichtigung versandt, dass ein Schriftstück für ihn bereit steht. Wenn die Benachrichtigung beispielsweise eine E-Mail ist, kann der Empfänger das Schriftstück abrufen, indem er einem Link in der E-Mail folgt. Alternativ könnte die Benachrichtigung beispielsweise auch über eine SMS erfolgen und der Nutzer ruft von sich aus das Abhol-Verzeichnis auf und holt sein Schriftstück ab. Wenn dies erfolgt ist, wird dem Schriftstück das Attribut "zugestellt" zugewiesen und der Vorgang ist abgeschlossen. Zusätzlich können auch Daten, wie beispielsweise der Zeitpunkt des Zustellens, insbesondere das Datum des Ablegens des Schriftstücks im Abhol-Verzeichnis, das Datum des Versendens der Mitteilung an den Empfänger und/oder das Abholen des Schriftstücks durch den Empfänger für eine spätere Verwendung im Rahmen anderer Verfahren für das Schriftstück gespeichert werden.

Wenn die eingegebene Empfänger-ID nicht im RegVz verzeichnet ist, oder keine Empfänger-ID angegeben wurde, werden weitere Empfängerdaten abgefragt. Dies können beispielsweise die Anschrift, der Name oder das Geburtsdatum des Empfängers sein. Es können aber auch andere Daten sein, die sich einem Empfänger eindeutig zuordnen lassen. Beispielsweise könnte, wenn der Nutzer ein amtliches Schriftstück zustellen möchte, die Sozialversicherungs- oder Firmenbuchnummer des Empfängers angegeben werden, da sich diese eindeutig zuordnen lassen. Wurde auf diese Weise ein Empfänger eindeutig identifiziert, kann mit der so ermittelten Empfänger-ID das Schriftstück zustellt werden, wie zuvor beschrieben.

In Fällen, in denen entweder keine Empfänger-ID verzeichnet ist oder zu einer Empfänger-ID keine Möglichkeit einer nicht-analogen Benachrichtigung gegeben ist, wird das Schriftstück automatisch ausgedruckt und auf analogem Wege versandt.

Gemäß einer bevorzugten Durchführungsform der Erfindung wird überprüft, wie lange ein Schriftstück bereits zur Abholung bereit ist. Dazu wird dem Ablegen des Schriftstücks im Abhol-Verzeichnis und/oder dem Versenden der Mitteilung ein Zeitwert zugewiesen und ab der nicht-analogen Benachrichtigung die Zeit gemessen. Sobald der Zeitwert überschritten wird, erfolgt automatisch der Versand auf analogem Wege. Das Zuweisen des Zeitwertes kann dabei sowohl automatisch als auch manuell erfolgen. Beispielsweise könnte vorab festgelegt sein, dass jedes Schriftstück, das nach Ablauf von vierzehn Tagen noch nicht abgeholt wurde, automatisch in den analogen Versand gegeben wird. Oder der Nutzer legt bereits beim Hinterlegen des Schriftstückes im Abhol-Verzeichnis einen Wert fest, beispielsweise, dass das Schriftstück nach Ablauf von drei Werktagen ausgedruckt und analog versandt werden soll. Selbstverständlich kann der Zeitwert auch in Stunden, Wochen, Monaten oder ähnlichem angegeben werden.

Gemäß einer weiteren bevorzugten Durchführungsform der Erfindung wird ein Passwort abgefragt, bevor der Empfänger das Schriftstück abholen kann. Dies kann dem Empfänger im Zuge der Benachrichtigung, dass ein Schriftstück abgeholt werden kann, mitgeteilt werden. Alternativ kann es sich auch um ein festes, beispielsweise mit der Empfänger-ID verknüpftes Passwort handeln.

Bevorzugt wird dem Empfänger das Passwort auf einem anderen Weg mitgeteilt, als ihm mitgeteilt wird, dass ein Schriftstück zur Abholung bereit ist. Beispielsweise könnte gleichzeitig mit einer E-Mail, dass ein Schriftstück zur Abholung bereit ist, eine SMS mit einem Passwort versandt werden. Lässt sich das Schriftstück beispielsweise nur über einen in der E-Mail enthaltenen Link und mit einem via SMS versandten Passwort öffnen, wird dabei zusätzlich ein besonders hoher Grad an Datensicherheit geschaffen. Dies ist vor allem dann besonders vorteilhaft, wenn es sich bei dem zuzustellenden Schriftstück um ein besonders vertrauliches Schriftstück handelt.

Gemäß einer zusätzlichen oder alternativen Ausführungsform der Erfindung kann dem Schriftstück ein zu begleichender Betrag und ein Attribut "zu bezahlen" zugeordnet sein. Wenn zu einer Empfänger-ID Kontodaten hinterlegt sind und der Empfänger über ein abholbereites Schriftstück informiert werden konnte, wird der Empfänger beim Abholen des Schriftstücks über den zu begleichenden Betrag informiert und es wird gefragt, ob der Betrag beglichen werden soll. Wenn der Empfänger diese Abfrage bestätigt, wird der Betrag über die im RegVz hinterlegten Kontodaten beglichen und, nachdem der Betrag beglichen wurde, wird dem Schriftstück das Attribut "bezahlt" zugewiesen.

Beispielsweise könnte ein städtisches Amt für Parkraumbewirtschaftung einem Bürger die Information zustellen, dass ihm ein Parkausweis im Bereich seiner Wohnung bewilligt wurde, und gleichzeitig auffordern, die Gebühren für den bewilligten Parkausweis zu begleichen. Wenn der Empfänger bei der Erstellung des RegVz seine Zustimmung gegeben hat, dass seine Kreditkartennummer seitens des Amtes gespeichert werden darf, kann er nun schnell zu seinem in Aussicht gestellten Parkausweis kommen. Er stimmt der beim Abrufen gestellten Anfrage, ob der Betrag beglichen werden soll, zu und der Betrag wird folglich über seine Kreditkarte belastet. Die Mitteilung mit Zahlungsaufforderung kann damit seitens des Amtes sowohl als zugestellt als auch als bezahlt verzeichnet werden und der Bürger erhält schnell und zuverlässig den gewünschten Parkausweis.

Weitere vorteilhafte und bevorzugte Durchführungsformen der Erfindung sind Gegenstand der übrigen Unteransprüche.

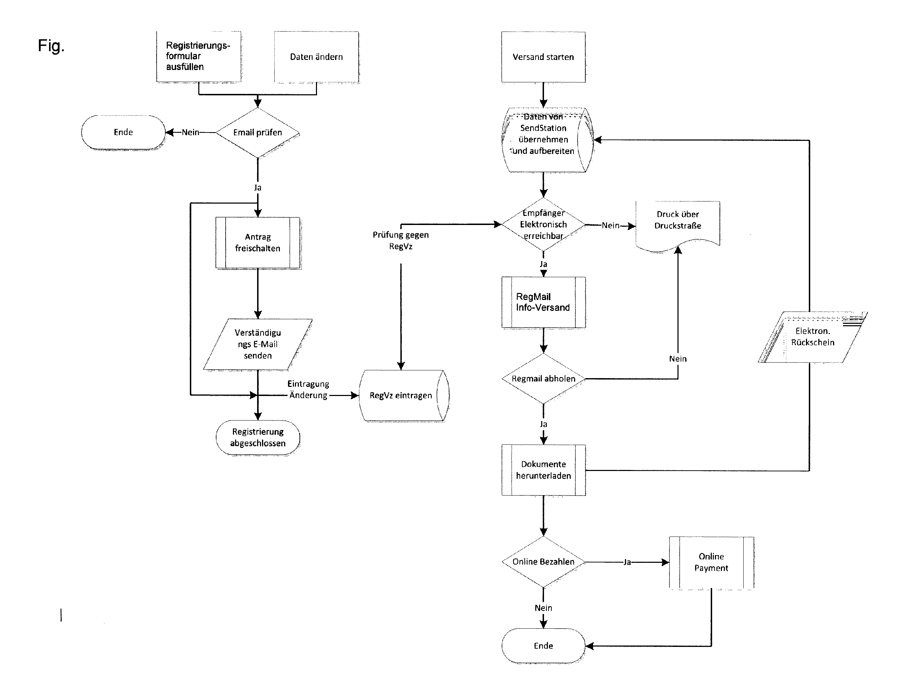

Die Erfindung wird im Folgenden anhand der Zeichnung beispielhaft weiter erläutert.

Die Figur zeigt anhand eines Flussdiagramms einen beispielhaften Ablauf eines erfindungsgemäßen Verfahrens.

wenn ein Empfänger sich für eine erfindungsgemäße bzw. auch als dual bezeichnete Zustellung von Schriftstücken eintragen möchte, gibt er zunächst in einem Formular alle Daten bekannt, von denen er möchte, dass diese verzeichnet werden, bzw. die für eine problemlose Zustellung erforderlich sind. Dies erfolgt vorzugsweise über ein online-Formular, kann aber beispielsweise auch analog durch ein Papierformular, das vom Empfänger per Hand ausgefüllt wird, erfolgen.

In der beispielhaften Durchführungsform des Verfahrens gibt der Empfänger seine E-Mail-Adresse an, über welche er künftig über das Vorhandensein eines zuzustellenden Schriftstückes informiert werden möchte. Diese wird dann auf ihre Richtigkeit überprüft, indem eine Bestätigungsmail an die genannte E-Mail-Adresse geschickt wird. Diese kann dann vom Empfänger, beispielsweise über einen Bestätigungslink, bestätigt werden. Ähnlich könnte aber beispielsweise auch eine Mobilfunknummer angegeben worden sein, an die eine Bestätigungs-SMS geschickt wird, die dann mit einer Antwort-SMS bestätigt werden kann.

Nachdem die Bestätigung erfolgt ist, wird dem Empfänger eine verständigungs-E-Mail gesandt, dass seine Registrierung erfolgreich war, und die angegebenen Daten werden im Empfänger-Registrierungs-verzeichnis (RegVz) hinterlegt. Dabei werden die Daten des Empfängers mit der Empfänger-Identifikation (Empfänger-ID) verknüpft.

Damit gilt die Registrierung als abgeschlossen.

Zusätzlich oder alternativ kann das RegVz auch, ohne dass ein Ausfüllen von Formularen durch den Empfänger nötig ist, angelegt werden. Beispielsweise könnte den Studenten einer Universität bei der Immatrikulation automatisch eine E-Mail-Adresse der Universität zugewiesen und die Daten der Studenten zusammen mit der E-Mail-Adresse im RegVz hinterlegt werden. Als Empfänger-ID könnte dann beispielsweise die Matrikelnummer des Studenten dienen.

Wenn ein Schriftstück versandt werden soll, werden dabei zunächst die einem Versender bekannten Informationen und das Schriftstück mit einem dafür geeigneten Nutzerinterface (SendStation) erfasst. Die erfassten Daten werden dann dahingehend überprüft, ob die Möglichkeit besteht, dem Nutzer eine digitale Information über das Vorhandensein des Schriftstücks zu geben. Hierzu werden die in der SendStation angegebenen Daten des Empfängers mit dem RegVz verglichen. Besteht diese Möglichkeit nicht, wird das Schriftstück ausgedruckt und auf analogem Wege zugestellt. Wenn die Möglichkeit besteht, wird eine registrierte Versandinformation (RegMail) an den Nutzer geschickt.

Der Nutzer kann dann mit der registrierten Versandinformation das Schriftstück abholen. Wenn die Abholung erfolgt, indem das Schriftstück bzw. Dokument herunter geladen wird, geht ein elektronischer Rückschein an den Versender, sodass dieser erfährt, dass das Schriftstück zugestellt wurde.

Wenn das Schriftstück nicht abgeholt wird, kann optional nach einem festgesetzten Zeitraum ebenfalls das Dokument ausgedruckt und auf herkömmlichem analogen Weg versandt werden.

Wurde das Schriftstück elektronisch abgeholt, kann der Empfänger nach Bedarf zur Zahlung eines mit dem Schriftstück verknüpften Betrages aufgefordert werden. Wenn der Empfänger dem zustimmt, wird er automatisch zu einer online-Bezahlmöglichkeit (online Payment) weiter geleitet.

Wenn er dem nicht zustimmt, gilt der Versandtvorgang automatisch als abgeschlossen.

Zusätzlich oder alternativ kann zwischen der Hinterlegung und der Benachrichtigung des Empfängers ein bestimmtes Zeitfenster vorgesehen sein. Innerhalb dieses Zeitfensters hat der Versender die Möglichkeit, die Sendung anzuhalten oder zu stornieren. Eine angehaltene Sendung kann, im Unterschied zu einer stornierten Sendung, zu einem beliebigen späteren Zeitpunkt wieder zur Versendung/Hinterlegung freigegeben werden.

## Patentansprüche

1. Verfahren zum Zustellen von Schriftstücken an einen Empfänger mit Empfängerdaten, die in einem Empfänger-Registrierungs-verzeichnis hinterlegt sind, welches die Empfängerdaten mit einer Empfänger-Identifikation verknüpft, wobei das Verfahren folgende Schritte aufweist:
i) ein Nutzer hinterlegt ein digitales Schriftstück in einem Abhol-Verzeichnis,
ii) es wird eine Empfänger-Identifikation abgefragt,
ii.1) wenn der Nutzer eine Empfänger-Identifikation eingibt folgt Schritt iii),
iii) es wird überprüft ob die Empfänger-Identifikation im Empfänger-Registrierungs-verzeichnis vorhanden ist,
iii.1) wenn die Überprüfung aus Schritt iii) erfolgreich ist und eine nicht-analoge Benachrichtigungsmöglichkeit verzeichnet ist, folgt Schritt iv),
iv) anhand der korrekten Empfänger-Identifikation wird der Empfänger informiert, dass ein für ihn bestimmtes digitales Schriftstück zur Abholung bereit ist,
iv.1) der Empfänger holt das digitale Schriftstück ab und es folgt Schritt v),
v) dem Schriftstück wird das Attribut, "zugestellt" zugewiesen
vi) wenn einer der Punkte ii) bis v) nicht durchführbar ist oder nicht erfolgt, wird das Schriftstück als "nicht digital zugestellt" markiert.

2. Verfahren nach Anspruch 1, **gekennzeichnet durch** die Schritte:
ii.2) wenn der Nutzer keine Empfänger-Identifikation angibt, folgt Schritt ii.a),
iia) es werden weitere Empfängerdaten abgefragt, die mit den Daten des Empfänger-Registrierungs-verzeichnisses verglichen werden,
iia.1) wenn die weiteren Empfängerdaten mit Daten aus dem Empfänger-Registrierungs-Verzeichnis übereinstimmen und eine nicht-analoge Benachrichtigungsmöglichkeit verzeichnet ist, wird eine mit den weiteren Empfängerdaten korrespondierende Empfänger-Identifikation ausgegeben und es folgt Schritt iv).

3. Verfahren nach Anspruch 2, **gekennzeichnet durch** den Schritt:
iia.2) wenn die weiteren Empfängerdaten mit keinen Daten aus dem Empfänger-Registrierungs-Verzeichnis übereinstimmen oder im Empfänger-Registrierungs-Verzeichnis keine nicht-analoge Benachrichtigungsmöglichkeit hinterlegt ist folgt Schritt vi),

4. Verfahren nach Anspruch 2 oder 3, **gekennzeichnet durch** den Schritt:
iii.2) wenn die Überprüfung aus Schritt iii) nicht erfolgreich ist folgt Schritt iia)

5. Verfahren nach einem der Ansprüche 1 bis 4, **gekennzeichnet durch** den Schritt:
iii.3) wenn die Überprüfung aus Schritt iii) erfolgreich ist, aber im Empfänger-Registrierungs-verzeichnis keine nicht-analoge Benachrichtigungsmöglichkeit hinterlegt ist folgt Schritt vi),

6. Verfahren nach einem der Ansprüche 1 bis 5, **dadurch gekennzeichnet, dass** dem Schritt iv) ein Zeitwert zugewiesen wird, dass die Zeit ab erfolgtem Schritt iv) gemessen wird und dass, wenn der Zeitwert erreicht oder überschritten wird, automatisch Schritt vi) folgt.

7. Verfahren nach einem der Ansprüche 1 bis 5, **dadurch gekennzeichnet, dass** dem Schritt iv) ein Zeitpunkt zugewiesen wird, und dass, wenn der Zeitpunkt überschritten oder erreicht wird, automatisch Schritt vi) folgt.

8. Verfahren nach einem der Ansprüche 1 bis 7 **dadurch gekennzeichnet, dass** im Zuge von Schritt iv.1) ein Passwort abgefragt wird und der Nutzer das digitale Schriftstück erst nach einer richtigen Passworteingabe abrufen kann.

9. Verfahren nach Anspruch 8, **dadurch gekennzeichnet, dass** der Empfänger das Passwort im Zuge von Schritt iv) erhält.

10. Verfahren nach Anspruch 9, **dadurch gekennzeichnet, dass** das Passwort auf einem von Schritt iv) verschiedenen Weg mitgeteilt wird oder abgefragt werden kann.

11. Verfahren nach einem der Ansprüche 1 bis 10, **dadurch gekennzeichnet dass** Schriftstücke, die in Schritt vi) markiert wurden, automatisch ausgedruckt und auf analogem Wege zugestellt werden.

12. Verfahren nach einem der Ansprüche 1 bis 11, **dadurch gekennzeichnet, dass** einem Schriftstück ein zu begleichender Betrag und dem Schriftstück das Attribut "zu bezahlen" zugeordnet ist und dass das Verfahren den Schritt:
iva) informieren des Empfängers über den zu begleichenden Betrag und abfragen ob der Nutzer den Betrag sofort begleichen möchte.

13. Verfahren nach Anspruch 12, **dadurch gekennzeichnet, dass** im Empfänger-Registrierungs-Verzeichnis Kontodaten hinterlegt sind und durch die auf den Schritt iva) folgenden Schritte:
iva.1) wenn der Empfänger die Abfrage von Schritt iva) bestätigt, den Betrag über die im Empfänger-Registrierungs-Verzeichnis hinterlegten Kontodaten begleichen und, nachdem der Betrag beglichen wurde, dem Schriftstück das Attribut "bezahlt" zuweisen,
iva.2) wenn der Empfänger die Abfrage von Schritt iva) nicht bestätigt, das Attribut "zu bezahlen" unverändert belassen und diese Information an ein Rechnungsverzeichnis weiter leiten

14. Verfahren nach Anspruch 13 **dadurch gekennzeichnet dass**, wenn Schritt iv) nicht erfolgt und/oder Schritt vi) ausgelöst wird, automatisch Schritt iva.2) erfolgt.
